# EUROPEAN PATENT SPECIFICATION

(11) **EP 2 089 139 B1**
(45) Date of publication and mention of the grant of the patent: **09.10.2013**
(21) Application number: 07834814.1
(22) Date of filing: 26.11.2007
(51) Int. Cl.: B01D 53/14, B01D 53/18, C01B 31/20

(54) **IMPROVED ABSORBENT REGENERATION**
VERBESSERTE ABSORPTIONSMITTELREGENERATION
AMÉLIORATIONS APPORTÉES À LA RÉGÉNÉRATION D'UN ABSORBANT

(30) Priority: 24.11.2006 NO 20065413
(43) Date of publication of application: 19.08.2009
(73) Proprietor: Aker Engineering & Technology AS, 1326 Lysaker (NO)
(72) Inventor: WOODHOUSE, Simon, 2010 Strømmen (NO)
(74) Representative: Balle, Morten
(86) International application number: PCT/NO2007/000418
(87) International publication number: WO 2008/063082

(56) References cited:
- WO-A-2007/073201
- DE-A1- 3 627 777
- DE-A1- 3 738 913
- KIRK, OTHMER: "Carbon Dioxide : Commercial Production" 1978, KIRK, OTHMER, ENCYCLOPEDIA OF CHEMICAL TECHNOLOGY, 3RD EDITION, VOL. 4, JOHN WILEY & SONS , US , XP002475903 page 730 - page 731

## Description

### Technical field

The present invention relates to the field of CO₂ capture from a gas mixture. More specifically the present invention relates to CO₂ capture from a CO₂ containing gas, such as combustion gas from combustion of carbonaceous material or from other CO₂ liberating processes. Most specifically the present invention relates to an improved method and plant for regeneration of a CO₂ absorbent in a method and plant for capturing of CO₂.

### Background

The continually increasing combustion of fossil fuel, such as coal, natural gas and oil, during the last centuries has resulted in an increase in the concentration of CO₂ in the atmosphere. The increasing concentration of CO₂ has caused concern due to the greenhouse effect caused by CO₂. The greenhouse effect is suspected already to have caused at least some of the changes in the climate that have been seen during the last decades, and is according to simulation models suspected to cause even more and potentially dramatic changes in the climate of planet earth.

This has caused a call for action from scientists, environmentalists and politicians throughout the world, to stabilize or even reduce the discharge of CO₂ from combustion of fossil fuel into the atmosphere. A stabilization or even reduction of the discharge of CO₂ into the atmosphere from combustion of fossil fuel may be achieved by capturing and safe depositing of CO₂ from the exhaust gas from thermal power plants and other plants where fossil fuel is combusted.

The captured CO₂ may be injected in sub terrain formations such as aquifers, oil wells for enhanced oil recovery or in depleted oil and gas wells for deposition. Tests indicate that CO₂ remains in the sub terrain formation for thousands of years and is not released into the atmosphere.

Capturing of CO₂ from a gas by means of absorption is well known and has been used for decades, e.g. for removal of CO₂ (and other acid gases) from produced natural gas at gas fields. The absorbents used or suggested in the prior art have been different aqueous alkaline solutions, such as potassium carbonate, see e.g. US 4,160.810, and different amines, see e.g. US 4.112.051, US 4.397.660 and US 5.061.465. Separation of CO₂ from exhaust gas from thermal power plants by means of an amine solution, is known e.g. from US 4.942.734.

Common for these CO₂ capturing solutions is that the gas mixture to be separated is introduced countercurrent to the aqueous absorbent in an absorber column. The gas leaving the absorber column is CO₂ depleted (or acid gas depleted), whereas the CO₂ (or other acid gas) leaves the absorber column together with the absorbent. The absorbent is regenerated in the regenerator column and returned to the absorber column. Amine is regenerated by stripping the amine solution with steam in the regeneration column. The steam is generated in the reboiler at the base of the column.

Figure 1 and the accompanying text of WO 2004/080573 describes a low pressure regeneration process for a CO₂ absorbent, wherein the absorbent is stripped in a regeneration column by countercurrent flow of steam. The pressure in the column is indicated to be about 0,15 atm, or about 0.15 bar, and the temperature at the bottom of the regeneration column is about 55 °C and decreasing towards the top of the column. The pressure of gaseous mixture of CO₂ and steam withdrawn at the top of the regeneration column, is increased to atmospheric pressure through a multistage compression with cooling and separation water between the stages. The cooling is effected by heat exchanging against lean absorbent to produce low pressure steam for the stripping in the regeneration column.
This sub-atmospheric regeneration process may be effective for carbonate absorbents. Amine absorbents does, however, need higher temperatures for stripping of CO₂ to take place at all. Low pressure regeneration additionally adds cost both to the construction and to the operation of the regeneration part of such a plant. Firstly, lowering the pressure results in the demand for more voluminous regeneration column, increasing the construction cost dramatically. Secondly, compression of the gas that is withdrawn from the top of the regeneration column from the pressure of the column to atmospheric pressure is energy consuming. The energy cost for compression of a gas from 0.15 bara to 1 bar, corresponds approximately to the compression of a gas from 1 bara to 7 bara. The low operating temperature of the stripper overheads enables, however, simple and effective compression of this gas.

Even though the reduction of the pressure in the regeneration column allows for a simple and advantageous vapour recompression for energy integration, the advantages drawn from the energy integration are smaller than the disadvantages due to additional cost. Additionally, the process would not be possible to operate efficiently, as mentioned above, for other absorbents than carbonates, and not for the often more preferred amines.

As illustrated above CO₂ as such is well known in the art. However, there is a need for several improvements in the CO₂ capturing process to make CO₂ free or low CO₂ emission thermal power plants economically profitable.

The plants for capturing of CO₂ are relative large, complex and expensive constructions. It is therefore desired to reduce the size, complexity and cost of the plants.

Capturing of CO₂ is carried out at the expense of the efficiency of a thermoelectric power plant utilizing fossil fuel, so that the output of electrical power and/or high temperature heat from a thermoelectric power plant is reduced. The reduced efficiency compared with a traditional plant makes these facilities less profitable. Improvements in the efficiency, i.e. reducing the energy cost in the CO₂ capturing process, are therefore sought.

The currently preferred absorbents are aqueous solutions of different amines. The commonly used amines are alkanol amines, such as e.g., diethanol amine, mono methyl ethanolamine, Aminoethylethanolamine, 2-(Metylamino)etanol, MDEA as well as other amines known by skilled man in the art. The absorption of CO₂ to the amine absorbents is a reversible, exothermic reaction. Accordingly, heat has to be supplied to the regenerator column to reverse the absorption and release the CO₂.

The heat supplied to the regenerator column according to the state of the art, is supplied in the reboiler where the absorbent is heated to a temperature typically from about 120 to 130 °C, at a normal operating pressure for such strippers of about 1.5 bara, or 0.5 barg. The absorbent in the reboiler may be heated by an electrical heat source but most commonly by a heat medium, such as e.g. high temperature steam. The reboiler is the main consumer of medium temperature heat energy in the absorption / desorption cycle for CO₂ capturing. A reduction in the demand for medium temperature heat energy would improve the economy of the CO₂ capturing process.

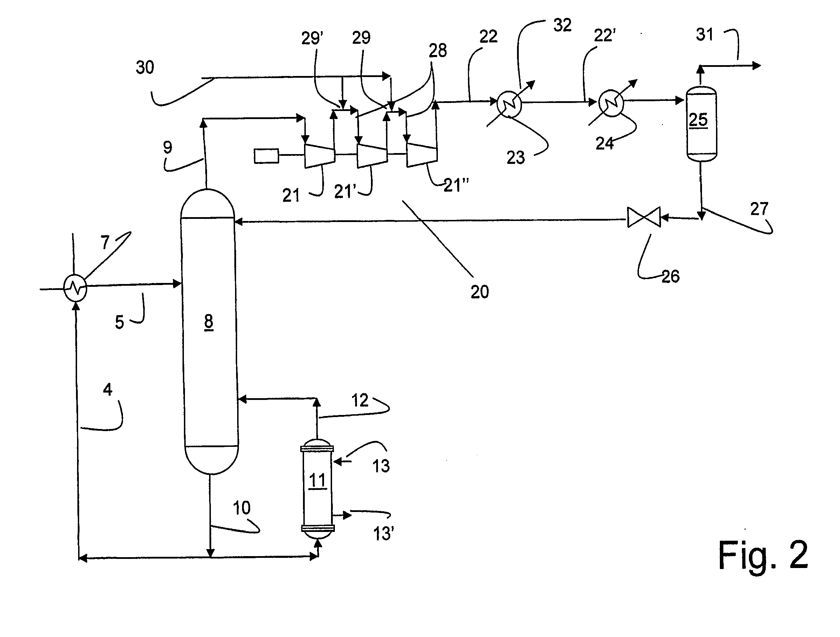

DE 36 27 777 A1 describes a method for regeneration of a rich absorbent for acid gases, of the above described type, where the steam and CO₂ withdrawn from the regeneration column are compressed and the compressed gas mixture is used to produce steam that is introduced into the stipping column (fig. 2).

DE 37 38 913 A1 describes compression of the steam and CO₂ withdrawn from the regeneration column before flashing, to

An objective for the present invention is thus to obtain a reduction in the reboiler duty, and thus a reduction in the demand for medium temperature heat energy, such as high temperature steam.

### Short description of the invention

According to a first aspect the present invention relates to a
method for regeneration of a rich absorbent having absorbed CO₂, to give a regenerated, or lean absorbent, and CO₂, in which method a stream of rich absorbent is introduced into a regenerator column which is operated at atmospheric pressure or higher, in which regeneration column the absorbent flows downwards and countercurrent with steam generated by heating lean absorbent at the base of the regenerator column,
where gas, mainly comprising released CO₂ and steam, is withdrawn from the top of the column and separated to give a stream of CO₂ that is removed, and condensed water that is recycled into the regenerator column,
and where lean, or regenerated, absorbent is withdrawn from the base of the column, where the gas that is withdrawn from the top of the regenerator column is compressed and cooled by heat exchanging to recover the heat, before separation of the gas into CO₂ and water,
wherein the gas withdrawn from the top of the regeneration column is compressed in a compression unit comprising two or more compression stages, and wherein water is introduced into the compressed gas between the compression stages
By compressing the total amount of CO₂ and steam withdrawn from the top before separation, the heat in the gas leaving the regeneration column is conserved and converted to medium temperature heat at the cost of the energy used to increase the pressure of the steam and elevate the steam condensation temperature. This medium temperature heat may then be used for other purposes, unlike lower temperature heat that are of no or limited value for other purposes and normally are released as cooling water.

According to one embodiment, the gas withdrawn from the top of the regeneration column is compressed to a pressure that is 2 to 5 times the operating pressure of the regeneration column before separation of the gas into CO₂ and water. By compressing the gas 2 to 5 times the operating pressure of the regeneration column, the total heat energy and temperature in the gas is increased sufficiently to produce medium temperature steam by heat exchanging against the compressed gas.

According to the invention, the gas withdrawn from the top of the regeneration column is compressed in a compression unit comprising two or more compression stages, and wherein water is introduced into the compressed gas between the compression stages. Several compression stages improves the control with the compression and allows cooling between steps.

According to a specific embodiment, the compressed gas is cooled by heat exchanging against water to heat said water to produce steam. Cooling by adding water into the heated compressed gas, reduces the temperature of the gas without loosing any heat energy in coolers, and will thus keep the heat energy in the gas and reduce heat loss.

According to an embodiment, the steam generated by heat exchanging is used for generation of steam by heating of lean absorbent at the base of the regenerator column. Using the steam generated by heat exchanging against the compressed gas will replace steam generated in the reboiler and thus reduce the reboiler duty.

According to a second aspect, the present invention relates to
method for capturing of CO₂ from a CO₂ containing gas, comprising introduction of a lean liquid absorbent and the CO₂ containing gas into an absorber in which the CO₂ containing gas is caused to flow countercurrent to the lean absorbent to produce a rich absorbent and a stream of CO₂ depleted gas, releasing the CO₂ depleted gas into the surroundings, withdrawing the rich absorbent from the absorber,
where the rich absorbent is introduced into a regenerator column which is operated at atmospheric pressure or higher, in which regeneration column the absorbent flows downwards and countercurrent with steam generated by heating lean absorbent at the base of the regenerator column,
where gas, mainly comprising released CO₂ and steam, is withdrawn from the top of the column and separated to give a stream of CO₂ that is removed, and condensed water that is recycled into the regenerator column,
and where lean, or regenerated, absorbent is withdrawn from the base of the column, where the gas that is withdrawn from the top of the regenerator column is compressed and cooled by heat exchanging to recover the heat, before separation of the gas into CO₂ and water,
wherein the gas withdrawn from the top of the regeneration column is compressed in a compression unit comprising two or more compression stages, and wherein water is introduced into the compressed gas between the compression stages.
This second aspect relates to the inclusion of the present regenerator in a method for capturing CO₂ from the surrounding, and thus includes the advantageous features into the plant.

According to a third aspect, the present invention relates to a
regenerator for a liquid absorbent for CO₂ comprising a regenerator column operated at atmospheric pressure or higher, a rich absorbent line for introduction of rich absorbent into the regenerator column, withdrawal means for withdrawing lean absorbent from the bottom of the regenerator column, a reboiler for heating of a portion of the withdrawn absorbent before reintroduction into the regenerator column for production of steam, a lean absorbent line for recycling of a portion of the absorbent withdrawn by withdrawal means to an absorber, a gas withdrawal line for withdrawal of CO₂ and vapor from the top of the regenerator column, and separation means for separating the gas withdrawn from the top of the regenerator column in a CO₂ stream that is exported from the regenerator, and water that is recycled to the regenerator column, and a vapor compression unit for compression of the CO₂ and steam to a pressure of 2 to 10 bara, provided between the regenerator column and the separation means, wherein the vapor compression unit is a multistage compression unit comprising two or more compressor stages where water injection means are provided to inject water into the compressed CO₂ and water between the compressor stages.
By compressing the total amount of CO₂ and steam withdrawn from the top before separation, the heat in the gas leaving the regeneration column is conserved and converted to medium temperature heat at the cost of the energy used to increase the pressure of the steam and elevate the steam condensation temperature. Elevation of the steam condensation temperature enables that the heat is recovered at higher temperatures. Using several stages of compression enables cooling between each stage. This increases the efficiency and reduces the design temperature of the compression system. Interstage cooling is normally carried out by heat exchangers and a cooling medium. The cooling medium removes heat from the system. Cooling by injection of steam removes no energy from the system and increases the amount of heat that can be recovered.The result is that energy loss in the total process is reduced.

According to a fourth embodiment, the present invention relates to a plant for capturing CO₂ from a CO₂ containing gas, comprising means for introducing a liquid lean absorbent and the CO₂ containing gas into an absorber in which the absorbent and the CO₂ containing gas are caused to flow countercurrent to produce a CO₂ depleted gas flow and a rich absorbent, means for releasing the CO₂ depleted gas flow into the surroundings, mans for withdrawing the rich absorbent and to introduce the rich absorbent into a regenerator, a regenerator for a liquid absorbent for CO₂ comprising a regenerator column operated at atmospheric pressure or higher, a rich absorbent line for introduction of rich absorbent into the regenerator column, withdrawal means for withdrawing lean absorbent from the bottom of the regenerator column, a reboiler for heating of a portion of the withdrawn absorbent before reintroduction into the regenerator column for production of steam, a lean absorbent line for recycling of a portion of the absorbent withdrawn by withdrawal means to an absorber, a gas withdrawal line for withdrawal of CO₂ and vapor from the top of the regenerator column, and separation means for separating the gas withdrawn from the top of the regenerator column in a CO₂ stream that is exported from the regenerator, and water that is recycled to the regenerator column, and a vapor compression unit for compression of the CO₂ and steam to a pressure of 2 to 10 bara, provided between the regenerator column and the separation means, wherein the vapor compression unit is a multistage compression unit comprising two or more compressor stages where water injection means are provided to inject water into the compressed CO₂ and water between the compressor stages.. This fourth embodiment relates to a CO₂ capturing plant incorporating the above regenerator, and gives thus the same advantages to the complete capturing plant.

The term "low temperature heat source" or "low temperature heat medium" as used in the present description, is used to describe a heat source or a heat medium, such as water, steam, or other heat medium, having an outlet temperature from a heat exchanger below 110 °C. The outlet temperature from a heat exchanger for a low temperature heat source may be below 105 °C, below 100 °C or below 95 °C. The inlet temperature into a heat exchanger for a low temperature heat medium may be below 130 °C, such as below 125 °C.

The term "medium temperature heat" or "medium temperature heat medium" as used in the present description, is used to describe a heat source or heat medium, such as water, steam or other heat medium, having an outlet temperature form a heat exchanger above 120 °C, such as above 125 °C or above 130 °C. A medium energy heat source or heat medium, normally has an inlet temperature to a heat exchanger of above 125 °C, more preferably above 130 °C.

A medium temperature heat medium may be steam at a temperature above 125 °C, or above 130 °C, which is condensed in a heat exchanger to produce condensate water at a temperature that is from about 1 to about 10 °C lower than the inlet temperature of the steam. This condensate water may then be used as a low temperature heat medium for less heat demanding processes.

The term "compressor stages" as used in the present description and claims, is used to cover both physical compressor units comprising two or more compressor stages, or physically separated compressors each being one stage.

### Short description of the figures

Figure 1 is a schematic diagram of a CO₂ capturing plant according to the state of the art, and
Figure 2 is a schematic diagram of an embodiment of the present improved amine regeneration part of a CO₂ capturing plant.

### Detailed description of the present invention

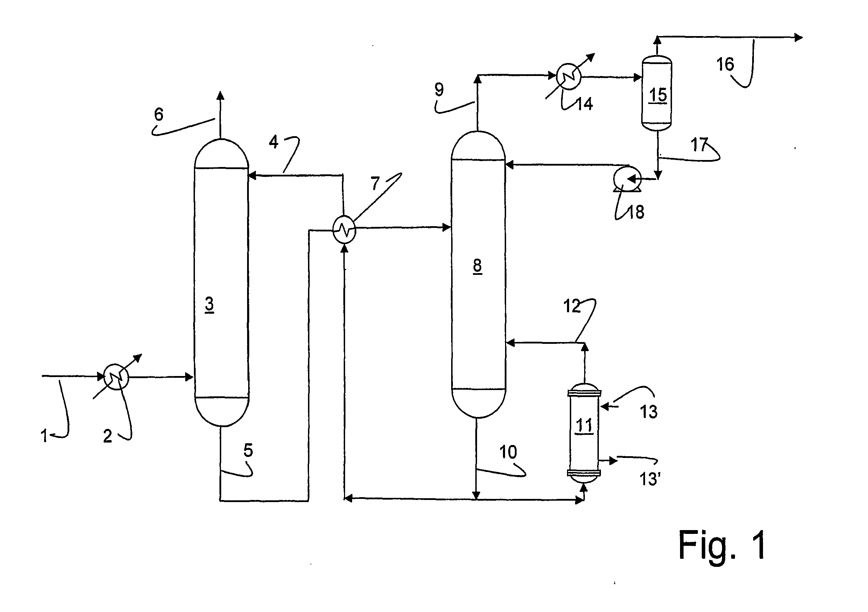

Figure 1 illustrates a CO₂ capturing plant according to the prior art, where exhaust gas from combustion of carbonaceous fuel enters the CO₂ capturing plant through an exhaust line 1. The exhaust gas in line 1 is substantially cooled by utilization of the high temperature heat energy from the combustion for production of electrical energy. The temperature of the exhaust entering the CO₂ capturing plant through line is normally from about 120 °C to about 90 °C . The exhaust gas from line 1 is introduced into a cooling section in which it is saturated with water and cooled to a temperature from about 35 °C to about 60 °C.

The cooled and humidified exhaust gas is then introduced into the lower part of an absorption tower 3 in which the exhaust gas flows from the bottom to the top of the absorption tower 3 countercurrent to a lean absorbent, i.e. absorbent that is stripped for CO₂, that is introduced into the upper part of the absorption tower through a lean absorbent line 4. Lean gas, i.e. exhaust gas where a substantial part of the CO₂ is removed, is removed through a gas exit line 6 at the top of the absorption tower, whereas rich absorbent, i.e. absorbent having absorbed CO₂, is removed from the absorption tower through a rich absorbent line 5.

The rich absorbent is heated against lean absorbent that is returned to the absorption tower in a heat exchanger 7 to a temperature typically in the range between 90 and 110 °C, before the rich absorbent is introduced into a regenerator column 8. In the regenerator column 8 the rich absorbent flows downwards, countercurrent to steam generated by heating some of the absorbent in a regeneration reboiler 11. Lean absorbent leaves the regenerator column through a lean absorbent outlet 10. A part of the lean absorbent in the outlet 10 is introduced into the regeneration reboiler 11 where it is heated to a temperature typically in the range between 120 and 130 °C, to produce hot absorbent and steam which is re-introduced into the regenerator column through a line 12. The lean absorbent in the reboiler 11 is typically heated by means of electricity, or a heating medium, such as e.g. steam. When using a heating medium for heating the absorbent in the regeneration reboiler is introduced through a line 13 and removed through a line 13'. Steam as a heat medium for the reboiler is normally introduced as a high pressure steam at a temperature of 130 °C to about 140 °C, and leaves through line 13' as condensed steam at the same temperature. In other words, the energy transferred from the heat medium to the absorbent in the reboiler is the heat of condensation of the steam.

The heating of the column from the bottom gives a temperature gradient at steady state from the bottom to the top of the column, where the temperature at the top is from 10 to 50 °C lower than at the bottom, depending on the actual design of the column.

The lean absorbent in line 10 that is not introduced into the regeneration reboiler, is recycled back to the absorption column 3 through the line 4 and cooled in the heat exchanger 7 against rich absorbent in the line 5. In the heat exchanger 7 the relatively cold rich absorbent is heated against the relatively hot lean absorbent leaving the stripper at a temperature of about 120 °C. Depending on the actual dimensioning and construction of the plant, the temperature of the rich amine leaving the heat exchanger 7 for the amine stripper may be from about 90 to about 110 °C.

The pressure in the regeneration column is normally atmospheric pressure or higher to obtain an effective regeneration of the absorbent, or stripping of CO₂. The pressure in the regeneration is often 1.5 bar or higher. In a practical situation, the pressure is often from about 1.5 to about 2.0 bar, but may even exceed this pressure.

CO₂ released from the absorbent, water vapor and minor amounts of absorbent, are withdrawn from the regenerator column 8 through a gas withdrawal line 9. The gas in the gas withdrawal line 9 is cooled in a reflux condenser 14 to condense water that is separated from the remaining gas, mainly comprising CO₂ in a CO₂ separator 15. CO₂ gas and some remaining water vapor is removed from the CO₂ separator 15 through a CO₂ line 16 for further treatment, such as drying, compression and deposition. The condensed water in the CO₂ separator is withdrawn through a line 17 and pumped back to the top of the regeneration column 8 by means of a pump 18. The skilled man in the art will understand that the water vapor withdrawn through line 9, and the condensed water removed in the separator 15, may comprise minor amounts of absorbent. The water and water vapors used in the present description and claims are therefore intended to include water and water vapor including minor amounts of absorbent, where appropriate.

Figure 2 illustrates a preferred embodiment of the present invention. This embodiment mainly corresponds to the method and plant described with reference to figure 1, with the exception that the gas withdrawn from the regeneration column 8 in line 9 is directly compressed in a compression unit 20 without separation of water before the compression step.

The compression unit preferably comprises two or more serially connected compressors or compressor stages 21, 21'. 21" connected by connection lines 28. Water from a water supply line 30 is introduced into the compressed, and thereby heated gas, between the compressor stages in the connection lines 28 through water injectors 29, 29'. The water cools and saturates the gas before the next compression stage.

The gas is typically compressed in the compression unit 20 to a pressure typically 2 to 5 times higher than the operating pressure of the regenerating column, corresponding to a pressure of the gas leaving the compression unit of about 2 to about 10 bar. More typically, the pressure of the gas leaving the compression unit is from about 4 bar to about 8 bar.

The compressed and heated gas, leaving the compression unit 20 through a line 22, is cooled in a heat exchanger 23 in which some of the water and absorbent are condensed, to heat a heat medium in a line 32. The stream in line 22' comprising condensate and gas, is thereafter further cooled in a cooler 24, before the condensate and gas is separated in a separator 25. The gaseous phase is withdrawn from the separator 25 in CO₂ line 31 for further treatment, such as compression, drying and deposition. The liquid phase in the separator 25, mainly comprising water with minor amounts of absorbent, is withdrawn from the separator in a liquid line 27 and is optionally controlled by means of a valve 26 and recirculated into the regeneration column.

By compressing the total gas withdrawn from the regeneration column, comprising CO₂, water vapor and minor amounts of absorbent, the condensation temperature of the water vapour in the gas is elevated. This means that the heat removed to condense the water can be recovered at an elevated temperature and used in the process.

The heat from the gas leaving the compression unit 20 in line 22 may e.g. be used as a heat source for the reboiler 11. The heat medium leaving the heat exchanger 23 may be used as at least a part of the medium temperature heat medium entering the reboiler 11 through line 13, or the heat exchanger 23 is actually the reboiler 11.

An exemplary plant for capturing of CO₂ from the exhaust gas of a 400 MW gas fired power station with CO₂ removal by MEA has been simulated and key data estimated. According to the simulated model, the CO₂ removal system removes 85% of the CO₂ in the exhaust gas. The standard system demonstrated in figure 1 will require an amine regenerator reboiler 11 with a duty of 152 MW. Heat is supplied in the form of saturated steam at 4 bara and 144 °C. Steam condensate leaves the reboiler at 144 °C. In a plant according to a state of the art, the condensate is cooled and pumped back to the power station for generation of steam. The amine regenerator operates at 1.9 bara.

According to the simulation model of the present invention, the vapor exiting the regeneration tower is compressed to 6 bara by 4 stages of compression. Between each compression stage the vapor is cooled by injection of water. The compressed vapor is at 144 °C and 6 bara. The vapor is passed to the heat exchanger where it is cooled to 133 °C. The vapor is then passed to the condenser for final cooling to 25 °C. The heat duty of the heat exchanger is 36 MW. This heat can be used directly in the reboiler or it can be used to generate steam which can be used in the reboiler.

All carbon dioxide produced is compressed for storage or disposal. The reboiler duty is reduced to 116 MW, a reduction of 36 MW. The vapor compressor unit 20 has a duty of 12 MW. However, the duty of the carbon dioxide compressor is reduced by 4 MW Resulting in a net increase in power consumption for compression of 8 MW.

Accordingly, the use of vapor compression to elevate the water condensation temperature according to the present invention, makes it possible to reduce the steam requirement for the regenerator from 152 MW to 116MW and thereby reducing the steam requirement of the regenerator by 24%. It should be noted that the electrical power consumption increases by 8 MW

## Claims

1. A method for regeneration of a rich absorbent having absorbed CO2, to give a regenerated, or lean absorbent, and CO2, in which method a stream of rich absorbent is introduced into a regenerator column (8) which is operated at atmospheric pressure or higher, in which regeneration column (8) the absorbent flows downwards and countercurrent with steam generated by heating lean absorbent at the base of the regenerator column (8),
where gas, mainly comprising released CO2 and steam, is withdrawn from the top of the column (8) and separated to give a stream of CO2 that is removed, and condensed water that is recycled into the regenerator column (8),
and where lean, or regenerated, absorbent is withdrawn from the base of the column (8),
where the gas that is withdrawn from the top of the regenerator column (8) is compressed and cooled by heat exchanging to recover the heat, before separation of the gas into CO2 and water,
**characterised in that** the gas withdrawn from the top of the regeneration column (8) is compressed in a compression unit (200) comprising two or more compression stages (21, 21', 21 "), and wherein water is introduced into the compressed gas between the compression stages

2. The method of claim 1, wherein the absorbent is an amine absorbent.

3. The method of claim 1 or 2, wherein the operating pressure of the regenerator column (8) is 1.5 bara or higher.

4. The method of any of the claims 1 to 3, wherein the gas withdrawn from the top of the regeneration column (8) is compressed to a pressure that is 2 to 5 times the operating pressure of the regeneration column (8) before separation of the gas into CO₂ and water.

5. The method according to any of the preceding claims, wherein the compressed gas is cooled by heat exchanging against water to heat said water to produce steam.

6. The method according to claim 5, wherein the steam generated by heat exchanging is used for generation of steam by heating of lean absorbent at the base of the regenerator column.

7. The method according to claim 1 comprising capturing of CO₂ from a CO₂ containting gas wherein a lean liquid absorbent and the CO₂ containing gas are introduced into an absorber (3) in which the CO₂ containing gas is caused to flow countercurrent to the lean absorbent to produce a rich absorbent and a stream of CO₂ depleted gas, releasing the CO₂ depleted gas into the surroundings, withdrawing the rich absorbent from the absorber (3), where the rich absorbent is introduced into a regenerator column (8).

8. The method of claim 7, wherein the absorbent is an amine absorbent.

9. The method of claim 7 or 8, wherein the operating pressure of the regenerator column (8) is 1.5 bara or higher.

10. The method of any of the claims 7 to 9, wherein the gas withdrawn from the top of the regeneration column (8) is compressed to a pressure that is 2 to 5 times the operating pressure of the regeneration column (8) before separation of the gas into CO₂ and water.

11. The method according to any of the claims 7 to 10, wherein the compressed gas is cooled by heat exchanging against water to heat said water to produce steam.

12. The method according to claim 11, wherein the steam generated by heat exchanging is used for generation of steam by heating of lean absorbent at the base of the regenerator column.

13. A regenerator for a liquid absorbent for CO₂ comprising a regenerator column (8) operated at atmospheric pressure or higher, a rich absorbent line (5) for introduction of rich absorbent into the regenerator column (8), withdrawal means (10) for withdrawing lean absorbent from the bottom of the regenerator column (8), a reboiler (11) for heating of a portion of the withdrawn absorbent before reintroduction into the regenerator column (8) for production of steam, a lean absorbent line (4) for recycling of a portion of the absorbent withdrawn by withdrawal means (10) to an absorber (3), a gas withdrawal line (9) for withdrawal of CO₂ and vapor from the top of the regenerator column (8), and separation means (25) for separating the gas withdrawn from the top of the regenerator column (8) in a CO₂ stream that is exported from the regenerator (8), and water that is recycled to the regenerator column (8), and a vapor compression unit (20) for compression of the CO₂ and steam to a pressure of 2 to 10 bara, provided between the regenerator column (8) and the separation means (20), wherein the vapor compression unit (20) is a multistage compression unit comprising two or more compressor stages (21, 21', 22") where water injection means (29, 29') are provided to inject water into the compressed CO₂ and water between the compressor stages.

14. A plant for capturing CO₂ from a CO₂ containing gas, comprising means ((4) for introducing a liquid lean absorbent and the CO₂ containing gas into an absorber (3) in which the absorbent and the CO₂ containing gas are caused to flow countercurrent to produce a CO₂ depleted gas flow and a rich absorbent, means (6) for releasing the CO₂ depleted gas flow into the surroundings, means (5) for withdrawing the rich absorbent and to introduce the rich absorbent into a regenerator (8) according to claim 13.

## Patentansprüche

1. Verfahren zum Regenerieren eines gesättigten Absorbens, welches CO₂ absorbiert hat, um ein regeneriertes oder mageres Absorbens und CO₂ zu ergeben, wobei beim Verfahren ein Strom von gesättigtem Absorbens einer Regeneratorsäule (8) zugeführt wird, welche bei Atmosphärendruck oder höher betrieben wird, wobei in der Regenerationssäule (8) das Absorbens abwärts und im Gegenstrom mit Dampf fließt, welcher durch Erwärmen des mageren Absorbens an der Basis der Regeneratorsäule (8) erzeugt wird,
wobei ein hauptsächlich freigesetztes CO₂ und Dampf umfassendes Gas am oberen Ende der Säule (8) entnommen und abgetrennt wird, um einen Strom von CO₂ welches entfernt wird, und Kondenswasser, welches in die Regeneratorsäule (8) rückgeführt wird, zu ergeben, und wobei mageres oder regeneriertes Absorbens vom Boden der Säule (8) entnommen wird,
wobei das Gas, welches am oberen Ende der Regeneratorsäule (8) entnommen wird, durch Wärmeaustausch verdichtet und gekühlt wird, um die Wärme vor Trennen des Gases in CO₂ und Wasser rückzugewinnen,
**dadurch gekennzeichnet, dass** das am oberen Ende der Regenerationssäule (8) entnommene Gas in einer Verdichtereinheit (200) verdichtet wird, welche zwei oder mehrere Verdichterstufen (21, 21', 21'') umfasst, und wobei Wasser dem verdichteten Gas zwischen den Verdichterstufen zugesetzt wird.

2. Verfahren nach Anspruch 1, wobei das Absorbens ein Amin-Absorbens ist.

3. Verfahren nach Anspruch 1 oder 2, wobei der Betriebsdruck der Regeneratorsäule (8) 1,5 bar oder höher beträgt.

4. Verfahren nach einem der Ansprüche 1 bis 3, wobei das am oberen Ende der Regenerationssäule (8) entnommene Gas bis zu einem Druck verdichtet wird, welcher das 2- bis 5-Fache des Betriebsdrucks der Regenerationssäule (8) vor Trennen des Gases in CO₂ und Wasser beträgt.

5. Verfahren nach einem der vorhergehenden Ansprüche, wobei das verdichtete Gas durch Wärmeaustausch mit Wasser gekühlt wird, um das Wasser zur Dampfherstellung zu erwärmen.

6. Verfahren nach Anspruch 5, wobei der durch Wärmeaustausch erzeugte Dampf zur Erzeugung von Dampf durch Erwärmen von magerem Absorbens an der Basis der Regeneratorsäule verwendet wird.

7. Verfahren nach Anspruch 1, wobei zum Auffangen von CO₂ aus einem CO₂-enthaltenden Gas ein mageres flüssiges Absorbens und das CO₂-enthaltende Gas einem Absorber (3) zugeführt werden, in welchem das CO₂-enthaltenden Gas veranlasst wird, im Gegenstrom zum mageren Absorbens zu fließen, um ein gesättigtes Absorbens und einen Strom von CO₂-armen Gas herzustellen, wobei das CO₂-arme Gas in die Umgebung freigesetzt wird, wobei das gesättigte Absorbens vom Absorber (3) entnommen wird, wo das gesättigte Absorbens einer Regeneratorsäule (8) zugeführt wird.

8. Verfahren nach Anspruch 7, wobei das Absorbens ein Amin-Absorbens ist.

9. Verfahren nach Anspruch 7 oder 8, wobei der Betriebsdruck der Regeneratorsäule (8) 1,5 bar oder höher beträgt.

10. Verfahren nach einem der Ansprüche 7 bis 9, wobei das am oberen Ende der Regenerationssäule (8) entnommene Gas bis zu einem Druck verdichtet wird, welcher das 2- bis 5-fache des Betriebsdrucks der Regenerationssäule (8) vor Trennen des Gases in CO₂ und Wasser beträgt.

11. Verfahren nach einem der Ansprüche 7 bis 10, wobei das verdichtete Gas durch Wärmeaustausch mit Wasser gekühlt wird, um das Wasser zur Dampfherstellung zu erwärmen.

12. Verfahren nach Anspruch 11, wobei der durch Wärmeaustausch erzeugte Dampf zur Erzeugung von Dampf durch Erwärmen von magerem Absorbens an der Basis der Regeneratorsäule verwendet wird.

13. Regenerator für ein flüssiges Absorbens für CO₂, umfassend eine Regeneratorsäule (8), welche bei Atmosphärendruck oder höher betrieben wird, eine Leitung für gesättigtes Absorbens (5) zum Zuführen von gesättigtem Absorbens in die Regeneratorsäule (8), Entnahmemittel (10) zur Entnahme mageren Absorbens vom Boden der Regeneratorsäule (8), einen Verdampfer (11) zum Erwärmen eines Teils des entnommenen Absorbens vor Wiedereinführen in die Regeneratorsäule (8) zum Herstellen von Dampf, eine Leitung für mageres Absorbens (4) zum Rückführen eines Teils des durch Entnahmemittel (10) entnommenen Absorbens zu einem Absorber (3), eine Gasentnahmeleitung (9) zum Entnehmen von CO₂ und Dampf am oberen Ende der Regeneratorsäule (8), und Trennmittel (25) zum Trennen des am oberen Ende der Regeneratorsäule (8) entnommenen Gases in einen CO₂-Strom, welcher vom Regenerator (8) ausgegeben wird, und Wasser, welches in die Regeneratorsäule (8) rückgeführt wird, und eine zwischen der Regeneratorsäule (8) und den Trennmitteln (20) vorgesehene Dampfverdichtereinheit (20) zum Verdichten von CO₂ und Dampf bis zu einem Druck von 2 bis 10 bar, wobei die Dampfverdichtereinheit (20) eine Mehrstufen-Verdichtereinheit ist, welche zwei oder mehrere Verdichterstufen (21, 21', 21'') umfasst, wobei Wassereinspritzmittel (29, 29') vorgesehen sind, um Wasser in das verdichtete CO₂ und Wasser zwischen den Verdichterstufen einzuspritzen.

14. Anlage zum Abscheiden von CO₂ aus einem CO₂-enthaltenden Gas, umfassend Mittel (4) zum Zuführen eines flüssigen mageren Absorbens und des CO₂-enthaltenden Gases in einen Absorber (3), in welchem das Absorbens und das CO₂-enthaltende Gas veranlasst werden, im Gegenstrom zu fließen, um einen CO₂-armen Gasstrom und ein gesättigtes Absorbens herzustellen, Mittel (6) zum Freisetzen des CO₂-armen Gasstroms in die Umgebung und Mittel (5) zum Entnehmen des gesättigtes Absorbens und um das gesättigte Absorbens einem Regenerator (8) nach Anspruch 13 zuzuführen.

## Revendications

1. Procédé de régénération d'un absorbant riche ayant absorbé du CO2 pour donner un absorbant régénéré, ou pauvre, et du CO2, procédé dans lequel un flux d'absorbant riche est introduit dans une colonne de régénérateur (8)
qui est activée à la pression atmosphérique ou plus élevée, colonne de régénération (8) dans laquelle l'absorbant s'écoule vers le bas et à contre-courant avec un flux produit en chauffant de l'absorbant pauvre au niveau de la base de la colonne de régénérateur (8),
où du gaz, comprenant principalement du CO2 libéré et de la vapeur, est extrait à partir de la partie supérieure de la colonne (8) et séparé pour donner un flux de CO2 qui est enlevé, et de l'eau condensée qui est recyclée dans la colonne de régénérateur (8),
et où de l'absorbant pauvre, ou régénéré, est extrait à partir de la base de la colonne (8),
où le gaz qui est extrait à partir de la partie supérieure de la colonne de régénérateur (8) est comprimé et refroidi par un échange thermique pour récupérer la chaleur, avant séparation du gaz en CO2 et de l'eau,
**caractérisé en ce que** le gaz extrait à partir de la partie supérieure de la colonne de régénération (8) est comprimé dans une unité de compression (200) comprenant deux ou plus de deux étages de compression (21, 21', 21"), et dans lequel de l'eau est introduite dans le gaz comprimé entre les étages de compression.

2. Procédé selon la revendication 1, dans lequel l'absorbant est un absorbant d'amine.

3. Procédé selon les revendications 1 ou 2, dans lequel la pression de fonctionnement de la colonne de régénérateur (8) est de 1,5 barA ou plus élevée.

4. Procédé selon l'une quelconque des revendications 1 à 3, dans lequel le gaz extrait à partir de la partie supérieure de la colonne de régénérateur (8) est comprimé à une pression qui est de 2 à 5 fois la pression de fonctionnement de la colonne de régénération (8) avant séparation du gaz en CO2 et de l'eau.

5. Procédé selon l'une quelconque des revendications précédentes, dans lequel le gaz comprimé est refroidi par un échange thermique contre de l'eau pour chauffer l'eau pour produire de la vapeur.

6. Procédé selon la revendication 5, dans lequel la vapeur produite par échange thermique est utilisée pour la création de vapeur en chauffant de l'absorbant pauvre à la base de la colonne de régénérateur.

7. Procédé selon la revendication 1, comprenant la capture de CO2 à partir d'un gaz contenant du CO2 dans lequel un absorbant liquide pauvre et le gaz contenant du CO2 sont introduits dans un absorbeur (3) dans lequel le gaz contenant du CO2 est amené à s'écouler à contre-courant par rapport à l'absorbant pauvre pour produire un absorbant riche et un flux de gaz appauvri en CO2, on libère le gaz appauvri en CO2 dans l'environnement, on extrait l'absorbant riche à partir de l'absorbeur (3), l'absorbant riche étant introduit dans une colonne de régénérateur (8).

8. Procédé selon la revendication 7, dans lequel l'absorbant est un absorbant d'amine.

9. Procédé selon les revendications 7 ou 8, dans lequel la pression de fonctionnement de la colonne de régénérateur (8) est de 1,5 barA ou plus élevée.

10. Procédé selon l'une quelconque des revendications 7 à 9, dans lequel le gaz extrait à partir de la partie supérieure de la colonne de régénérateur (8) est comprimé à une pression qui est de 2 à 5 fois la pression de fonctionnement de la colonne de régénérateur (8) avant séparation du gaz en CO2 et de l'eau.

11. Procédé selon l'une quelconque des revendications 7 à 10, dans lequel le gaz comprimé est refroidi par échange thermique contre de l'eau pour chauffer l'eau pour produire de la vapeur.

12. Procédé selon la revendication 11, dans lequel la vapeur produite par échange thermique est utilisée pour la création de vapeur en chauffant de l'absorbant pauvre au niveau de la base de la colonne de régénération.

13. Régénérateur pour absorbant liquide de CO2 comprenant une colonne de régénérateur (8) activée à une pression atmosphérique ou supérieure, une ligne d'absorbant riche (5) pour introduction d'absorbant riche dans la colonne de régénérateur (8), des moyens d'extraction (10) pour extraire de l'absorbant pauvre à partir du fond de la colonne de régénérateur (8), un rebouilleur(11) pour chauffer une partie de l'absorbant extrait avant réintroduction dans la colonne de régénérateur (8) pour production de vapeur, une ligne d'absorbant pauvre (4) pour recycler une partie de l'absorbant extrait par les moyens d'extraction (10) vers un absorbeur (3), une ligne d'extraction de gaz (9) pour l'extraction de CO2 et de vapeur à partir du sommet de la colonne de régénérateur (8), et des moyens de séparation (25) pour séparer le gaz extrait à partir du sommet de la colonne de régénérateur (8) en un flux de CO2 qui est exporté à partir du régénérateur (8), et de l'eau qui est recyclée vers la colonne de régénérateur (8), et une unité de compression de vapeur (20) pour la compression du CO2 et de la vapeur à une pression de 2 à 10 barA, agencée entre la colonne de régénérateur (8) et les moyens de séparation (20), dans lequel l'unité de compression de vapeur (20) est une unité de compression à étages multiples comprenant deux ou plus de deux étages de compresseur (21, 21', 21") où des moyens d'injection d'eau (29, 29') sont agencés pour injecter de l'eau dans le CO2 comprimé et de l'eau entre les étages de compresseur.

14. Installation pour capturer du CO2 à partir d'un gaz contenant du CO2, comprenant des moyens (4) pour introduire un absorbant pauvre liquide et le gaz contenant du CO2 dans un absorbeur (3) dans lequel l'absorbant et le gaz contenant du CO2 sont amenés à s'écouler à contre-courant pour produire un gaz appauvri en CO2 et un absorbant riche, des moyens (6) pour libérer l'écoulement de gaz appauvri en CO2 dans l'environnement, des moyens (5) pour extraire l'absorbant riche et introduire l'absorbant riche dans un régénérateur (8) conformément à la revendication 13.
